# FASCICULE DE BREVET EUROPEEN

(11) **EP 2 344 811 B1**
(45) Date de publication et mention de la délivrance du brevet: **18.03.2015**
(21) Numéro de dépôt: 09741326.4
(22) Date de dépôt: 21.09.2009
(51) Int. Cl.: F23C 99/00, F23C 10/01, F23C 10/00, C10G 11/18

(54) **PROCÉDÉ ET DISPOSITIF OPTIMISÉS DE COMBUSTION PAR BOUCLE CHIMIQUE SUR DES CHARGES HYDROCARBONÉES LIQUIDES**
OPTIMIERTES VERFAHREN UND OPTIMIERTE VORRICHTUNG ZUR VERBRENNUNG MIT EINEM CHEMISCHEN KREISPROZESS FÜR FLÜSSIGE KOHLENWASSERSTOFFEINSÄTZE
OPTIMISED METHOD AND DEVICE FOR CHEMICAL LOOP COMBUSTION ON LIQUID HYDROCARBON FEEDSTOCK

(30) Priorité: 23.09.2008 FR 0805220
(43) Date de publication de la demande: 20.07.2011
(73) Titulaire: IFP Energies nouvelles, 92852 Rueil-Malmaison Cedex (FR); TOTAL RAFFINAGE CHIMIE, 92400 Courbevoie (FR)
(72) Inventeur: GAUTHIER, Thierry, F-69530 Brignais (FR); HOTEIT, Ali, F-69003 Lyon (FR); FORRET, Ann, F-69420 Longes (FR)
(86) Numéro de dépôt international: PCT/FR2009/001113
(87) Numéro de publication internationale: WO 2010/034900

(56) Documents cités:
- WO-A-2008/036902
- FR-A- 2 895 413
- US-A1- 2005 175 533

## Description

### Domaine de l'invention

L'invention concerne la combustion par boucle chimique des charges liquides, notamment une nouvelle technologie de mise en oeuvre de ce procédé.

### Art antérieur

La combustion par boucle chimique des charges liquides consiste à mettre en contact une charge hydrocarbonée liquide avec un oxyde métallique à haute température. L'oxyde métallique cède alors une partie de l'oxygène qu'il renferme, qui participe à la combustion des hydrocarbures. A l'issue de cette combustion, les fumées contiennent majoritairement des oxydes de carbone, de l'eau et éventuellement de l'hydrogène. En effet, il n'est pas nécessaire de mettre en contact l'air avec l'hydrocarbure et les fumées sont donc majoritairement composées des gaz de combustion et éventuellement d'un gaz de dilution servant au transport et à la fluidisation des particules (par exemple de la vapeur d'eau). Il est donc possible ainsi de produire des fumées exemptes majoritairement d'azote et contenant des teneurs en CO2 élevées (>90%vol.) permettant d'envisager le captage, puis le stockage de CO2. L'oxyde métallique ayant participé à la combustion est ensuite transporté vers une autre enceinte réactionnelle où il est mis en contact avec de l'air pour être réoxydé. Si les particules revenant de la zone de combustion sont exemptes de combustible, les gaz issus de cette zone réactionnelle sont majoritairement exempts de CO2 -qui n'est alors présent qu'à l'état de traces, par exemple à des concentrations inférieures à 1-2% en volume)- et consistent essentiellement en de l'air appauvri en oxygène, suite à l'oxydation des particules métalliques.

La mise en oeuvre d'un procédé de combustion par boucle chimique requiert des quantités d'oxydes métalliques importantes au contact du combustible. Ces oxydes métalliques sont généralement contenus soit dans des particules de minerai, soit dans des particules résultant de traitements industriels (résidus de l'industrie sidérurgique ou minière, catalyseurs de l'industrie chimique ou du raffinage usagés). On peut également utiliser des matériaux synthétiques tels que par exemple des supports d'alumine ou de silice alumine sur lesquels on aura déposé des métaux qui peuvent être oxydés (oxyde de Nickel par exemple). D'un oxyde métallique à l'autre, la quantité d'oxygène théoriquement disponible varie considérablement et peut atteindre des valeurs élevées voisines de 30%. Selon les matériaux cependant, la capacité maximale d'oxygène réellement disponible n'excède en général pas plus de 20% de l'oxygène présent. La capacité de ces matériaux à céder de l'oxygène n'excède donc au global pas plus de quelques pourcents en poids des particules et varie considérablement d'un oxyde à un autre, généralement de 0.1 à 10%, et souvent entre 0.3 à 1% poids. La mise en oeuvre en lit fluidisé est de ce fait particulièrement avantageuse pour conduire la combustion. En effet, les particules d'oxydes finement divisées circulent plus facilement dans les enceintes réactionnelles de combustion et d'oxydation, et entre ces enceintes, si l'on confère aux particules les propriétés d'un fluide (fluidisation).

La combustion par boucle chimique permet de produire de l'énergie, sous la forme de vapeur ou d'électricité par exemple. La chaleur de combustion de la charge est similaire à celle rencontrée dans la combustion classique. Celle-ci correspond à la somme des chaleurs de combustion et d'oxydation dans la boucle chimique. La répartition entre les chaleurs de combustion et d'oxydation dépend fortement des oxydes métalliques utilisés pour conduire la combustion par boucle chimique. Dans certains cas, l'exothermicité est répartie entre l'oxydation et la réduction du métal. Dans d'autres cas, l'oxydation est fortement exothermique et la réduction est endothermique. Dans tous les cas, la somme des chaleurs d'oxydation et de réduction est égale à la chaleur de combustion du combustible. La chaleur est extraite par des échangeurs situés à l'intérieur, en paroi ou en appendice des enceintes de combustion et / ou d'oxydation, sur les lignes de fumées, ou sur les lignes de transfert d'oxydes métalliques.

La combustion des charges solides et des charges gazeuses est bien décrite dans la littérature. Le principe de la combustion des charges liquides est connu (demande de brevet FR 08/02.450). Cependant, par rapport aux charges gazeuses et aux charges solides, la combustion de liquide par boucle chimique présente des spécificités importantes détaillées ci-dessous.

Lors du contact entre la charge liquide et les oxydes métalliques, une partie de la charge se vaporise, mais du coke se dépose sur les particules à cause du craquage thermique résultant de l'exposition du combustible liquide à de très hautes températures. Plus les charges sont lourdes et plus elles tendront à former des quantités de coke élevées. Ainsi, sur un gazole ou sur un distillat sous vide, la quantité de coke formée sera de l'ordre de 1 à 20% de la charge injectée. Sur un résidu atmosphérique ou sur un résidu sous vide, la quantité de coke formée varie de 10 à 80% en fonction de la nature de la charge injectée. Cette formation de coke dépend de la nature des charges (concentration en précurseurs de coke, déterminable par la mesure de la teneur en asphaltènes ou de la teneur en carbone conradson). Elle dépend également des conditions de mise en contact (température, rapport du débit d'hydrocarbure sur le débit d'oxyde, diamètre de gouttelettes, diamètre de particules....). Après contact entre la charge et les oxydes métalliques, deux types de réactions de combustion entre les hydrocarbures et les oxydes métalliques interviennent, la première plus facile résultant d'un contact entre l'hydrocarbure gazeux et les particules d'oxyde, la seconde plus lente résultant de la gazéification du coke déposé sur les particules en gaz de synthèse, qui brûlera ensuite rapidement avec les oxydes métalliques.

De ce fait, il est important de minimiser la formation de coke lors de l'injection de la charge liquide afin d'avoir des réactions de combustion aussi rapides que possible.

D'autre part, devant la formation de coke inévitable, il est important de s'assurer que les particules retournant dans la zone de combustion y séjournent suffisamment longtemps pour éliminer tout le coke formé. Contrairement au cas où la charge est solide, il est en effet ici impossible d'envisager une séparation des particules d'oxyde encore cokées des particules non cokées. Dans une combustion de charges solides, l'écart de densité, de taille, voire de propriétés magnétiques entre les particules de charbon et les particules d'oxyde est importante. Dans le cas d'une charge liquide, les particules dans la zone de combustion sont exclusivement des particules d'oxydes métalliques cokées et des particules d'oxydes métalliques non cokées, de propriétés très proches.

Les documents WO2008/036902 et US 2005/175533 décrivent un procédé et un dispositif de combustion en boucle chimique d'une charge hydrocarbonée liquide injectée sous forme atomisée. La charge atomisée vaporisée entre en contact avec les particules d'oxydes métalliques à l'intérieur de la zone de combustion.

La présente invention permet de pallier l'ensemble des problèmes de mise en oeuvre de combustion en boucle chimique de charges liquides évoqués ci-dessus.

### Description de l'invention

### Résumé de l'invention

L'invention concerne un procédé amélioré de combustion en boucle chimique d'au moins une charge hydrocarbonée liquide, dans lequel :
∘ on atomise la charge liquide avec un gaz d'atomisation pour l'introduire dans une zone de transport (2) des oxydes métalliques, en amont de la zone de combustion (3), à travers des moyens d'atomisation (6) permettant de former des gouttelettes de liquide finement dispersées dans le gaz d'atomisation ;
∘ on vaporise la charge liquide sous forme de gouttelettes au contact d'au moins une partie des oxydes métalliques dans la zone de transport (2), les conditions opératoires dans la zone de transport (2) étant choisies pour que la vitesse superficielle du gaz après vaporisation de la charge liquide soit supérieure à la vitesse de transport des particules d'oxydes métalliques ;
∘ on envoie l'ensemble des effluents issus de la zone de transport (2) dans une zone de combustion (3) permettant la réduction des oxydes métalliques, ladite zone de combustion (3) comprenant au moins un lit fluidisé en phase dense.

La zone de combustion en phase dense (3) est avantageusement dimensionnée de manière à ce que l'hydrodynamique des particules dans le ou les lit(s) fluidisé(s) en phase dense corresponde à au moins deux réacteurs parfaitement agités en série ou au moins deux étages de lit fluidisé en série.

Les moyens d'atomisation (6) sont préférentiellement situés à la paroi du réacteur de la zone de transport (2) et choisis de manière à former un jet dirigé vers le centre de la zone de transport (2).

Le jet a de préférence la forme d'un pinceau ayant un angle d'ouverture dans le plan vertical compris entre 7 et 20°, et un angle d'ouverture dans le plan horizontal compris entre 30 et 80°.

De manière préférée, les gouttelettes de charge liquide injectées ont un diamètre de Sauter moyen compris entre 0.5 et 2 fois le diamètre moyen des particules.
Les particules d'oxydes métalliques peuvent arriver dans la zone de transport (2) depuis la zone d'oxydation (1) à travers une ligne (13), ou par un recycle des particules provenant de la zone de combustion (3), ou encore sous forme d'un mélange d'oxydes métalliques ré oxydés provenant de la zone d'oxydation (1) et d'oxydes métalliques provenant de la zone de combustion (3).

On peut introduire dans le ou les lits fluidisés en phase dense de la zone de combustion (3) des oxydes métalliques directement issus de la zone d'oxydation (1), de manière à ce qu'une fraction inférieure ou égale à 50% de la quantité totale d'oxydes métalliques circulant entre la zone d'oxydation (1) et la zone de combustion (3) participe à la vaporisation de la charge liquide dans la zone de transport (2).

Dans un mode de réalisation du procédé selon l'invention, on introduit le gaz et les particules issus de la zone de transport (2) de manière conjointe à la base d'au moins un lit fluidisé de la zone de combustion (3) en équipant la partie supérieure de la zone de transport (2) de moyens de dispersion dans ledit lit fluidisé.

Dans un autre mode de réalisation du procédé selon l'invention, on sépare le gaz et les particules à la sortie de la zone de transport (2), soit pour introduire de manière séparée dans la zone de combustion (3) le gaz exempt de la majorité des oxydes métalliques et l'oxyde métallique exempt de la majorité du gaz, soit pour introduire dans la zone de combustion (3) l'oxyde métallique exempt de la majorité du gaz, et évacuer la phase gazeuse hors de la zone de combustion (3).

De préférence, la charge liquide est composée de fractions hydrocarbonées, seules ou en mélange, dont moins de 10% a un point d'ébullition inférieur à 340°C.

De manière préférée, au moins un lit fluidisé en phase dense de la zone de combustion (3) est équipé de moyens (25) permettant d'étager l'écoulement des particules d'oxyde métallique.

Dans un mode de réalisation, la zone de combustion (3) comprend au moins deux réacteurs (3a) et (3b) en lits fluidisés en phase dense, agencés l'un au-dessus de l'autre, les parois extérieures de ces deux réacteurs coïncidant, afin de prolonger par continuité la phase dense du réacteur (3a) dans la phase dense fluidisée du réacteur (3b).

L'invention concerne également un dispositif de combustion en boucle chimique d'au moins une charge hydrocarbonée liquide comprenant :
- une zone de transport (2) des oxydes métalliques sensiblement allongée et sensiblement verticale comprenant :
   ▪ des moyens d'injection de la charge liquide comprenant des moyens de mélange de la charge liquide avec un gaz d'atomisation et des moyens d'atomisation (6) de la charge liquide situés en périphérie de ladite zone de transport;
   ▪ des moyens d'alimentation d'au moins une partie des oxydes métalliques ;
- une zone de combustion (3) de la charge atomisée par réduction des oxydes métalliques comprenant au moins un lit fluidisé en phase dense, la zone de transport (2) étant située en amont de ladite zone de combustion (3).

De préférence, la zone de combustion (3) comprend un nombre de lits fluidisés en phase dense, dans un ou plusieurs réacteurs de combustion, supérieur à deux.

Les moyens d'alimentation des oxydes métalliques peuvent comprendre une ligne (13) de transport depuis la zone d'oxydation (1), et/ou une ligne de recycle des particules provenant de la zone de combustion (3).

La zone de transport (2) peut comprendre en sortie des moyens de dispersion du gaz et des particules solides dans la zone de combustion (3).

La zone de transport (2) peut comprendre en sortie des moyens de séparation du gaz et des particules solides.

Le procédé selon l'invention peut être utilisé pour le captage du CO2. De préférence, le taux de captage S du CO2 est supérieur à 90%.

Le procédé selon l'invention peut être utilisé pour la production d'énergie.

### Description détaillée de l'invention

L'objet de l'invention est de proposer un agencement de zones réactionnelles approprié à la combustion de liquide par la boucle chimique, permettant une injection contrôlée et optimale de liquide au contact des oxydes métalliques et un contrôle du temps de séjour des particules dans la zone de combustion. Ceci permet de réaliser l'essentiel de la combustion du coke déposé sur les particules dans le réacteur de combustion et donc d'avoir, dans les effluents gazeux du réacteur d'oxydation, au maximum 10%, préférentiellement 5 ou 2 %, voire moins, du CO2 résultant de la combustion de la charge introduite liquide dans le procédé de combustion en boucle chimique. Ainsi le taux de captage S de CO2 (défini comme le ratio entre le CO2 émis dans les fumées de la zone combustion par réduction de l'oxyde métallique rapportées aux émissions totales de CO2 du procédé) est préférentiellement supérieur à 90%.

En effet, dans les fumées de la zone de combustion par réduction de l'oxyde métallique, le CO2 est fortement concentré et il est possible de le transporter vers des zones de stockage. Au contraire, les fumées de la zone d'oxydation ne contiennent que de faibles quantités de CO2 diluées à l'azote de l'air, ce qui rend les possibilités de stockage du CO2 non avantageuses.

Dans le procédé en boucle chimique selon l'invention, la vaporisation de la charge liquide s'effectue au contact de l'oxyde métallique chaud provenant du réacteur d'oxydation ou ayant déjà été en contact avec les hydrocarbures. Le contrôle des conditions de vaporisation de la charge liquide pour minimiser la formation de coke est assuré par l'injection de la charge liquide finement atomisée, préférentiellement sous la forme de gouttelettes dont la taille est proche de la taille des particules d'oxydes métallique.

Les gouttelettes sont injectées dans une zone de transport des oxydes métalliques, afin que le renouvellement des particules au contact des gouttelettes de charge liquide soit assuré par un mouvement de circulation contrôlé.
Il faut souligner que l'injection de gouttelettes dans un lit fluidisé dense, dans lequel la vitesse de fluidisation des particules est inférieure à la vitesse de transport des particules et dans lequel la circulation de solides dépend intrinsèquement de la qualité de fluidisation et de la géométrie du réacteur n'est, en ce sens, pas satisfaisante. Il est donc préférable d'injecter les gouttelettes dans un conduit dans lequel les particules sont transportées, le renouvellement des particules au contact des gouttelettes dépendant alors uniquement du bilan pression aux bornés de la ligne de transport, qui peut être ajusté lors du dimensionnement de l'installation, ou pendant l'opération en ajustant la différence de pression entre les éléments de la boucle de circulation, en jouant sur l'ouverture ou la fermeture de vannes de circulation de solide, ou en ajustant les débits de fluidisation. A cet effet, dans le procédé selon l'invention, la zone de transport est en général sensiblement allongée et est préférentiellement verticale. Les conditions opératoires aux bornes de cette zone de transport (débits, pression...) sont choisies afin que la vitesse superficielle du gaz après vaporisation de la charge liquide soit supérieure à la vitesse de transport des particules. On entend par "vitesse superficielle du gaz après vaporisation de la charge liquide" le débit de la phase gazeuse, constituée des gaz provenant de la charge liquide et des gaz auxiliaires destinés à fluidiser le catalyseur et à atomiser la charge liquide, rapporté à la section du réacteur de la zone de transport.

Le rapport massique entre le débit d'oxydes métalliques et le débit de liquide est compris typiquement entre 2 et 100, préférentiellement compris entre 5 et 30, pour apporter suffisamment d'énergie aux gouttelettes par contact avec les particules d'une part, pour maximiser l'aire interfaciale des particules qui conditionnera les échanges thermiques et le dépôt de coke sur chaque particule d'autre part, et pour assurer ensuite par la vaporisation et réaction d'une fraction de la charge liquide le transport des particules grâce au transfert de quantité de mouvement de la phase gazeuse (constituée des gaz provenant de la charge liquide et des gaz auxiliaires destinés à fluidiser le catalyseur et à atomiser la charge liquide) vers les particules. Les gouttelettes sont préférentiellement injectées à la périphérie du réacteur où les particules sont transportées, grâce à un nombre important de moyens d'atomisation disposés autour du réacteur qui forment un jet dirigé vers le centre du réacteur.

Préférentiellement, le jet formé par chaque atomiseur aura la forme d'un pinceau, l'ouverture du jet permettant de couvrir un maximum de section du réacteur, afin de produire un rideau de gouttelettes qui doit être traversé par la circulation de catalyseur.

Préférentiellement, l'angle d'ouverture du pinceau projeté dans le plan horizontal est compris entre 30 et 80°.

Préférentiellement, l'angle d'ouverture du pinceau dans le plan vertical est compris entre 7 et 20° afin de limiter l'épaisseur du jet formé.

Le jet de gouttelettes est constitué des gouttelettes en suspension dans un gaz (préférentiellement de la vapeur d'eau, ou un mélange vapeur d'eau-CO2, ou les fumées recyclées) ayant au moins en partie servi à atomiser les gouttelettes.

Le ratio massique du gaz injecté avec les gouttelettes est avantageusement compris entre 1 et 15 % poids, préférentiellement de 3 à 8 % poids.

Les gouttelettes et le gaz injecté avec les gouttelettes forment un jet qui débouche généralement dans la zone de transport à une vitesse superficielle moyenne comprise entre 10 et 150 m/s, préférentiellement comprise entre 30 et 100 m/s. Il est important d'injecter la suspension gaz-gouttelettes dans la zone de transport à une vitesse élevée afin de pénétrer l'écoulement de particules.

Les moyens d'atomisation permettant de former des gouttelettes de petite taille sur des débits importants de liquide en présence de gaz sont bien connus de l'homme du métier. On peut par exemple utiliser des injecteurs de type venturi, où l'atomisation du liquide s'effectue en présence de gaz par passage dans une restriction, puis la suspension s'écoule dans un divergent avant d'être mise en forme dans un embout. On peut également utiliser un injecteur de type impact, dans lequel on trouve une cible sur laquelle le liquide arrive à haute vitesse et est cisaillé par un courant gazeux avant d'être transporté vers un embout de mise en forme du jet. On peut également envisager des systèmes plus complexes déjà bien décrits dans la littérature. Ces injecteurs permettent de former sur des débits unitaires importants (jusqu'à 30-60m3/h de liquide) des gouttelettes dont la taille est voisine de 100 microns ou moins avec des débits de gaz variant de 3 à 8% poids du liquide tout en limitant la dissipation d'énergie à des pertes de charges inférieures à 10-15 bars.

Avantageusement la réaction de combustion par mise en oeuvre de la boucle chimique est réalisée avec des particules d'oxydes métalliques dont le diamètre moyen (diamètre de Sauter) est compris entre 50 et 300 microns, les gouttelettes de charge liquide injectées ayant un diamètre de Sauter moyen compris entre 0,5 et 2 fois le diamètre moyen des particules, préférentiellement compris entre 0,8 et 1,2 fois le diamètre moyen des particules.

Les particules d'oxydes métalliques s'écoulant dans la zone de transport sont, avant contact avec la charge liquide, transportées en écoulement dense (en l'absence du gaz résultant de la vaporisation et de la réaction).

Avant la mise en contact avec les gouttelettes, le taux de vide de la suspension des particules d'oxydes métalliques est avantageusement compris entre 0,5 et 0,9, préférentiellement proche de 0,7 à 0,9 parties volumiques. La vitesse de transport de la suspension de particules avant contact avec la charge liquide est avantageusement comprise entre 0,3 et 5 m/s, préférentiellement proche de 0,6 à 2 m/s. Dans ces conditions, les particules s'écoulent de manière suffisamment dense dans la zone de transport, ce qui permet de bien disperser la chaleur apportée par les particules aux gouttelettes et de répartir uniformément le coke résultant du contact entre le liquide et les particules sur toutes les particules circulant dans la zone de transport.
Suite à la vaporisation d'une grande partie des hydrocarbures injectés au contact des particules, la vitesse superficielle du gaz dans la zone de transport augmente, ce qui permet le transport des oxydes métalliques en minimisant la dissipation d'énergie sous la forme de perte de charge. En effet, l'expansion volumique de la phase gazeuse provoque une dilution des particules et leur accélération, ce qui accentue encore la dilution.
La combustion des hydrocarbures vaporisés, la cokéfaction des fractions non vaporisées et les réactions de gazéification du coke formé sont initiées dans la zone de transport. Cette zone prend préférentiellement la forme d'un réacteur sensiblement allongé. Afin d'optimiser le contact entre le liquide et les oxydes métalliques, on limite si possible le diamètre du réacteur de transport à un diamètre compris entre 2 et 3 mètres. La hauteur du réacteur dépend du bilan pression de l'unité et est raisonnablement comprise entre 5 et 50 mètres, préférentiellement entre 10 et 30 mètres. Les flux massiques de particules transportés dans la zone de transport sont compris entre 50 et 1500 kg/s/m2, préférentiellement compris entre 300 et 1000 kg/s/m2 et la vitesse de gaz dans la partie supérieure de la zone de transport n'excède en général pas 30 m/s, pour limiter la perte de charge dans la zone de transport. La vitesse du gaz résulte de la vaporisation d'une partie de la charge hydrocarbonée qui craque. Elle peut avantageusement être contrôlée par l'ajout d'un gaz de transport en aval du dispositif d'injection de la charge (fumées par exemple).

Le temps de séjour des particules et du gaz dans la zone de transport est en général cependant trop faible pour envisager une combustion totale de l'hydrocarbure injecté, ce qui nécessite par ailleurs des quantités d'oxydes métalliques très importantes. En effet, les vitesses de transport du gaz dans la zone de transport varient raisonnablement entre 2 et 30 m/s, les particules circulant en moyenne deux à trois fois plus lentement que le gaz. Dans ces conditions, le temps de séjour du gaz et des particules dans le réacteur de transport est inférieur à une minute, ce qui peut être trop rapide pour envisager de réaliser la totalité de la combustion des hydrocarbures, et particulièrement du coke déposé sur les particules.

En fonction des conditions de mise en oeuvre, pour finir la combustion des hydrocarbures qui ont été vaporisés et du coke, il est nécessaire d'allonger le temps de contact entre les oxydes métalliques et les hydrocarbures. Cela s'effectue avantageusement dans la zone de combustion au moyen d'un ou plusieurs lits fluidisés en phase dense, dans lequel la vitesse superficielle du gaz est généralement comprise entre la vitesse minimum de fluidisation des particules et la vitesse limitant le régime de transport. En pratique, pour le type de particules utilisées et la granulométrie envisagée, la vitesse superficielle du gaz est avantageusement comprise entre 0,05 et 2m/s, préférentiellement comprise entre 0,1 et 1 m/s. Le taux de vide du lit fluidisé est avantageusement d'environ 0,4 à 0,8 dans la phase dense, préférentiellement compris entre 0,5 et 0,7 parties par volume. La hauteur de la phase dense du lit fluidisé est déterminée avantageusement en fonction du temps de séjour des particules dans la phase dense afin de laisser un temps suffisant au déroulement de la combustion du coke déposé sur les particules. Ainsi, le temps de séjour global des particules dans la zone de transport et dans le (s) lit(s) fluidisé(s) de la zone de combustion en aval de la zone de transport est souvent compris entre 1 et 15 minutes, préférentiellement compris entre 1 et 5 minutes, en fonction de la réactivité de l'oxyde métallique utilisé pour réaliser la combustion par boucle chimique.

La zone de transport (2) permettant le contact entre la charge liquide et les particules d'oxyde métallique, qui prend avantageusement la forme d'un réacteur sensiblement allongé, débouche préférentiellement dans le premier lit fluidisé en phase dense de la zone de combustion (3). De nombreux agencements sont possibles.

Ainsi, il est possible d'introduire le gaz et les particules ensemble à la base du lit fluidisé de la zone de combustion (3) en équipant la partie supérieure de la zone de transport (2) de moyens permettant leur dispersion dans le lit fluidisé bien connus de l'homme du métier (ouïes latérales sur les parois du réacteur, élargissement et plaque à trou fermant la partie supérieure du réacteur de transport, la distribution du gaz et des particules dans la phase dense du lit fluidisé s'effectuant grâce à un dimensionnement optimisé des orifices de la plaque à trou...).

Il est également possible de terminer la zone de transport (2) par un séparateur gaz particules et d'introduire séparément dans la zone de combustion en lit fluidisé en phase dense (3) le gaz exempt de la majorité des oxydes métalliques et l'oxyde métallique exempt de la majorité du gaz.

Dans une variante, on peut également envisager de terminer la zone de transport (2) par un séparateur gaz particules et d'introduire séparément dans la zone de combustion en lit fluidisé en phase dense l'oxyde métallique exempt de la majorité du gaz et d'évacuer la phase gazeuse de la zone réactionnelle en by-passant la zone en lit fluidisé en phase dense (3). Dans ces conditions cependant, la phase gazeuse sortant de la zone de transport sera en général incomplètement brûlée et contiendra des proportions importantes de CO, H2 ou d'hydrocarbures imbrûlés en fonction des conditions opératoires et particulièrement du débit d'oxyde métallique circulant dans la zone de transport.

Afin de terminer les réactions de combustion, on introduit avantageusement dans la zone de combustion (3) comprenant au moins un lit fluidisé en phase dense des oxydes métalliques directement issus de la zone d'oxydation (1).

En effet, la quantité d'oxydes métalliques nécessaire au bon contact avec la charge liquide ne correspond pas dans la majorité des cas (cela dépend de la nature des oxydes métalliques utilisés et de leur capacité de transfert d'oxygène) à la quantité stoechiométrique requise pour conduire la réaction ou pour assurer le bilan thermique de la boucle chimique. La quantité de particules d'oxydes métalliques requise pour assurer un bon contact avec la charge liquide et assurer la stoechiométrie de combustion dans la zone de transport (2) correspond généralement à moins de 50% du débit d'oxydes métalliques circulant entre la zone d'oxydation (1) et la zone de combustion ou réduction (3).
De ce fait, de manière préférée, une fraction correspondant à 50 à 95% de la quantité totale des oxydes métalliques circulant entre la zone d'oxydation (1) et la zone de combustion (3) est donc introduite directement dans le lit fluidisé en phase dense de la zone de combustion (3) en provenance de la zone d'oxydation (1), en fonction du transporteur d'oxygène choisi, cette proportion tendant vers des proportions plus faibles quand la capacité de transport d'oxygène augmente.

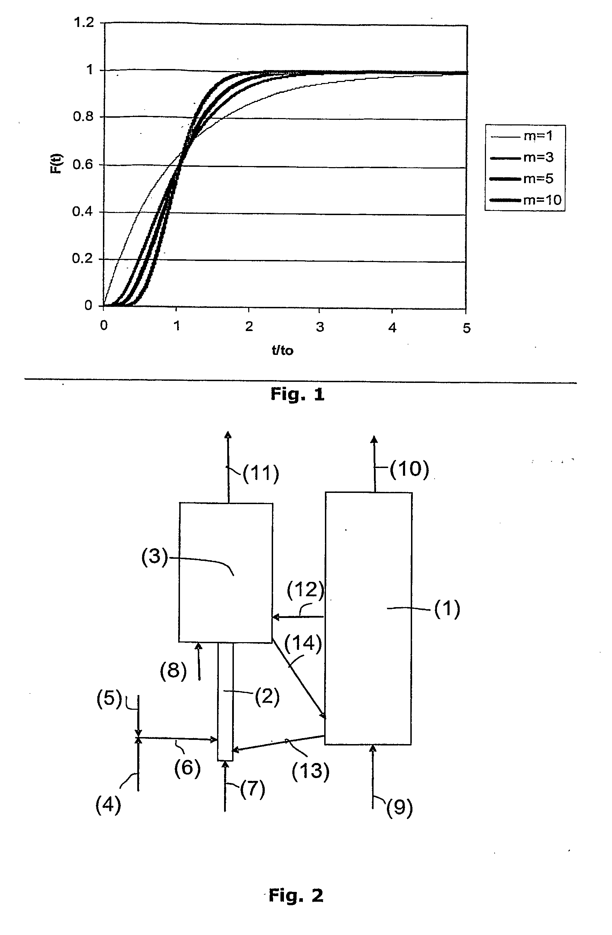

Un autre aspect essentiel de l'invention concerne le contrôle du temps de séjour des particules dans la zone de combustion (3), qui est réalisé au moyen d'un ou plusieurs lits fluidisés en phase dense. Le lit fluidisé en phase dense est un contacteur dans lequel le mélange axial des particules est très intense. En première approximation, on peut même supposer que l'écoulement des particules est parfaitement mélangé. Dans un réacteur parfaitement mélangé, la concentration en coke des particules sortant du réacteur est égale à la concentration moyenne des particules à l'intérieur du réacteur.
Or, pour optimiser au mieux ce réacteur et minimiser le volume réactionnel requis, il est souhaitable d'avoir un écoulement se rapprochant de l'écoulement piston, ce qui permet d'avoir un temps de séjour des particules homogène et une distribution des temps de séjour étroite autour du temps requis pour effectuer la réaction de combustion en minimisant le volume réactionnel.
En restant avec un lit fluidisé classique, on entraînerait nécessairement en sortie du réacteur de combustion des particules cokées vers le réacteur d'air, ce qui nuirait au captage du CO2. En effet, les particules cokées entraînées brûleraient au contact de l'air ce qui induirait des émissions de CO2 importantes dans les effluents du réacteur d'oxydation et serait préjudiciable à l'efficacité de captage du CO2 de l'installation de boucle chimique.
On sait qu'en mettant en série plusieurs réacteurs parfaitement agités, on se rapproche de l'écoulement piston. La figure 1 montre l'effet du nombre m de réacteurs parfaitement agités en série, sous forme d'une fonction cumulative de distribution des temps de séjour dans un réacteur composé de m réacteurs parfaitement agités en série en fonction de la constante de temps adimensionnelle τ=Volume/débit.

Afin de maintenir un taux de captage S de CO2 global optimal (notamment supérieur à 90, voire supérieur 95%) dans le procédé de combustion par boucle chimique tout en maintenant des tailles de réacteurs raisonnables, nous avons constaté qu'il était avantageux de mettre en oeuvre une zone de combustion (3) en lit fluidisé en phase dense présentant des caractéristiques hydrodynamiques correspondant à au moins deux réacteurs parfaitement agités en série ou au moins deux lits fluidisés en phase dense en série. Par exemple, on peut mettre en oeuvre une hydrodynamique des particules dans le lit fluidisé similaire à celle qu'on aurait dans trois réacteurs parfaitement agités en série. Dans ces conditions, moins de 1% des particules séjournent dans le réacteur pendant 15% du temps de séjour moyen défini par le volume de phase dense en lit fluidisé et divisé par le débit total de particules circulant dans le réacteur, 5% des particules séjournant moins de 0,27 fois ce temps de séjour moyen, 20% des particules séjournant moins de 0,57 fois ce temps de séjour moyen, le temps de séjour moyen étant défini comme le temps nécessaire pour effectuer une combustion totale dans un réacteur en écoulement piston. En terme de performances, on peut estimer que, dans ces conditions, on pourrait effectuer la combustion de 82% du coke dans un réacteur disposant de la même quantité de particules que celle d'un réacteur où l'écoulement des particules est parfaitement piston dans lequel on obtiendrait alors 90% de combustion du coke. Dans le même réacteur, avec un inventaire de particules identique, mais avec une hydrodynamique des particules dans le lit fluidisé correspondant à deux réacteurs parfaitement agités en série, la combustion du coke est de 78% environ. Dans le même réacteur avec un inventaire de particules identique, mais avec une hydrodynamique des particules dans le lit fluidisé correspondant à un seul réacteur parfaitement agité en série, on ne réaliserait plus que 69% de la combustion du coke déposé sur les particules. La quantité de coke entraînée vers la zone d'oxydation (1) diminue donc en fonction de la nature de l'hydrodynamique des particules dans ce réacteur.

En admettant que le coke déposé sur les particules représente 45% de la charge hydrocarbonée et étant donné que les fractions vaporisées brûlent plus rapidement que le coke, on peut en déduire que le CO2 émis dans la zone d'oxydation représente 14% du CO2 émis par l'installation globale si on met en oeuvre un réacteur parfaitement agité dans la zone de combustion en phase dense (3) consécutive à la zone de transport (2), alors que cette valeur tombe à moins de 10% si l'on met en oeuvre dans la zone de combustion en phase dense (3) une hydrodynamique des particules correspondant à plus de N=2 réacteurs parfaitement agités en série. Cette valeur tombe à environ 8% si l'on met en oeuvre dans la zone de combustion en phase dense (3) une hydrodynamique des particules correspondant à plus de N=3 réacteurs parfaitement agités en série. Plus l'hydrodynamique des particules dans la phase dense se rapproche de l'écoulement piston dans la zone de lit fluidisé en phase dense, et meilleure est l'efficacité de captage de CO2 de l'installation.

### Liste des figures

La figure 1 représente la distribution des temps de séjour dans un réacteur composé de m réacteurs parfaitement agités en série en fonction de la constante de temps adimensionnelle τ=Volume/débit.
Les figures 2, 3, 4 décrivent des schémas de procédés permettant la mise en oeuvre de différents modes de réalisation de l'invention. La figure 2 illustre l'exemple 2. La figure 3 se rapporte aux exemples 3 et 4.

### Figure 2 :

La combustion s'effectue dans les zones de réduction des oxydes métalliques : zone de transport (2) et zone de combustion (3). La charge liquide introduite par la ligne (4) est mélangée à un gaz d'atomisation introduit par la ligne (5) et le mélange est introduit dans la zone de transport (2), qui est un réacteur de forme sensiblement allongée, à travers des moyens d'atomisation (6) permettant de former des gouttelettes de liquide fines dispersées dans le gaz d'atomisation. Plusieurs points d'injection sont possibles. Les moyens d'atomisation (6) sont répartis en paroi du réacteur de la zone de transport (2), sensiblement dans la partie basse de celui-ci. La zone de transport (2) débouche dans la zone de combustion en lit fluidisé en phase dense (3) dans lequel la phase gazeuse et la phase solide sont dispersées. L'ensemble des effluents gazeux entre dans la zone de combustion en lit fluidisé en phase dense (3) et en sort par la ligne (11). La phase gazeuse est alors constituée essentiellement de CO2 ou de (CO, H2) en fonction des conditions stoechiométriques et de réaction imposées, de la vapeur d'eau et des oxydes de soufre et d'azote... Un gaz de fluidisation est introduit par une ligne (8) à la base de la zone de combustion en phase dense (3) et permet une fluidisation homogène sur toute la section. Ce gaz de fluidisation peut avantageusement être : de la vapeur d'eau, une fraction des effluents gazeux issus de la ligne (11) ou un mélange de vapeur d'eau et de fractions d'effluents issus de la ligne (11). Afin de limiter l'entraînement de particules en aval, des cyclones ou autres moyens de dépoussiérage bien connus de l'homme du métier sont disposés à l'intérieur de la zone de combustion en phase dense (3) ou à la sortie de celle-ci sur la conduite (11).
Les oxydes métalliques sont évacués vers la zone d'oxydation (1) à travers une ou plusieurs lignes de transport (14) qui soutirent le solide du lit fluidisé de la zone de combustion (3) ou des jambes de retour des cyclones assurant le dépoussiérage des effluents gazeux de la zone de combustion (3).
Dans la zone d'oxydation (1), l'oxyde métallique réduit par la combustion de la charge liquide est oxydé de nouveau au contact de l'air introduit par une ligne (9) dans un réacteur fluidisé opérant soit en phase dense soit en lit circulant. Les effluents gazeux contenant essentiellement de l'air appauvri en oxygène sortent de la zone d'oxydation (1) dans sa partie supérieure par la ligne (10), après avoir été dépoussiérés par la mise en oeuvre de moyens connus de l'homme du métier. La zone d'oxydation (1) peut être constituée d'un lit fluidisé circulant (vitesse superficielle du gaz supérieure à la vitesse de transport des particules) ou d'un lit fluidisé en phase dense (vitesse superficielle du gaz inférieure à la vitesse de transport des particules et supérieure à la vitesse minimum de fluidisation). Dans le cas d'un lit fluidisé circulant, une partie de l'oxyde circulant dans la zone d'oxydation (1) peut être recyclée à la sortie du réacteur vers le bas de la zone d'oxydation (1) à proximité de moyens d'introduction d'air après séparation préalable par des moyens de séparation tels que des cyclones.

L'oxyde métallique, une fois de nouveau oxydé, est ensuite envoyé pour effectuer la combustion en partie vers la zone de transport (2) à travers une ou plusieurs lignes de transport (13) débouchant dans la zone de transport (2) en amont des moyens (6) permettant l'atomisation de la charge. Un gaz (7) de fluidisation (par exemple de la vapeur) est introduit dans la zone (2) en amont des lignes de transport (13) pour assurer la fluidisation en amont du contact avec la charge liquide. Le reste de l'oxyde métallique est envoyé directement dans la zone de combustion en phase dense (3) à travers la ligne de transport (12) qui court-circuite la zone de transport (2).
L'oxyde métallique participant à la réaction de combustion dans la zone de transport (2) provient dans cet exemple de la zone d'oxydation (1) à travers la ligne (13). Il est également envisageable d'alimenter la zone de transport (2) d'oxyde métallique par un recycle des particules provenant de la zone de combustion en phase dense (3) ou par un mélange d'oxydes métalliques oxydés de nouveau provenant de la zone d'oxydation (1) et d'oxydes métalliques provenant de la zone de combustion (3).

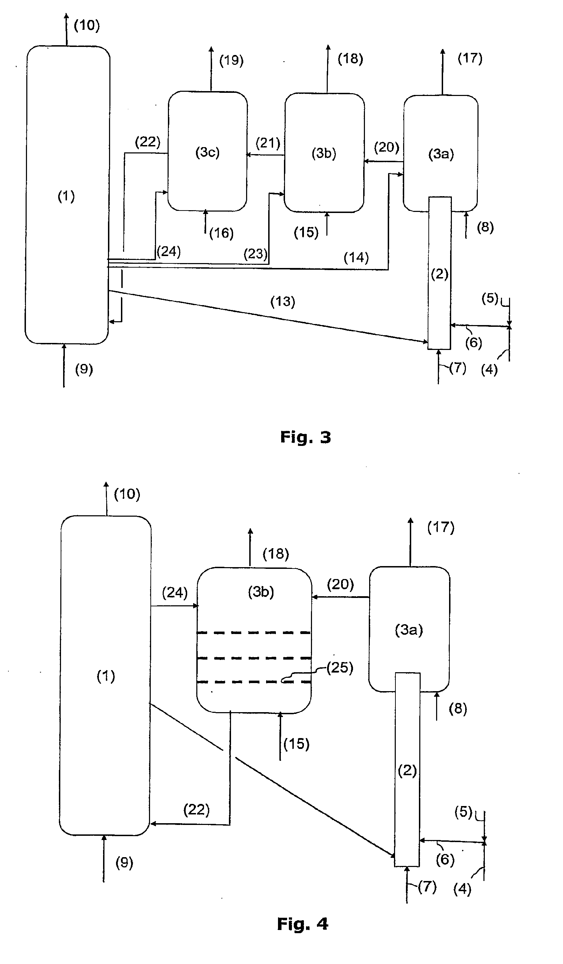

**Figure 3** **:** La figure 3 décrit un autre mode de mise en oeuvre de l'invention, dans lequel la zone de combustion (3) comprend trois réacteurs en lit fluidisé en phase dense en série (3a), (3b) et (3c).

La combustion en boucle chimique s'effectue par réduction des oxydes métalliques dans les réacteurs (2) et (3a, 3b et 3c).
La charge liquide introduite par la ligne (4) est mélangée à un gaz d'atomisation introduit par la ligne (5) et le mélange est introduit dans la zone de transport (2), qui est un réacteur de forme sensiblement allongée, à travers des moyens d'atomisation (6) permettant de former des gouttelettes de liquide fines dispersées dans le gaz d'atomisation. Plusieurs points d'injection sont possibles. Les moyens d'atomisation (6) sont répartis en paroi du réacteur de la zone de transport (2), sensiblement dans la partie basse de celui-ci. La zone de transport (2) débouche dans le réacteur (3a) de la zone de combustion en lit fluidisé en phase dense dans lequel la phase gazeuse et la phase solide sont dispersées. L'ensemble des effluents gazeux entre dans le réacteur (3a) de la zone de combustion en lit fluidisé en phase dense et en sort par la ligne (17). La phase gazeuse est alors constituée essentiellement de CO2 ou de (CO, H2) en fonction des conditions stoechiométriques et de réaction imposées, de la vapeur d'eau et des oxydes de soufre et d'azote... Un gaz de fluidisation est introduit par une ligne (8) à la base de la zone de combustion en phase dense, dans le réacteur (3a), et permet une fluidisation homogène sur toute la section. Ce gaz de fluidisation peut avantageusement être : de la vapeur d'eau, une fraction des effluents gazeux issus de la ligne (17) ou un mélange de vapeur d'eau et de fractions d'effluents issus de la ligne (17). Afin de limiter l'entraînement de particules en aval, des cyclones ou autres moyens de dépoussiérage bien connus de l'homme du métier sont disposés à l'intérieur de la zone de combustion en phase dense (3a) ou à la sortie de celle-ci sur la conduite (17).

Les oxydes métalliques sont évacués vers deux réacteurs (3b) et (3c), fluidisés indépendamment par des gaz arrivant par les lignes (15) et (16), dans lesquelles les particules sont fluidisées en phase dense (à une vitesse inférieure à la vitesse de transport des particules). Dans ces réacteurs, la fin de la combustion du coke déposé sur les particules est réalisée. Les effluents gazeux de combustion sortent des réacteurs fluidisés en phase dense (3b) et (3c) respectivement par les lignes (18) et (19), constitués essentiellement de CO2 ou de (CO, H2) en fonction des conditions stoechiométriques et de réaction imposée, de la vapeur d'eau et des oxydes de soufre et d'azote. Les gaz de fluidisation introduits par les lignes (15) et (16) à la base des réacteurs (3b) et (3c) permettent la fluidisation homogène sur toute la section. Ce gaz de fluidisation peut avantageusement être soit de la vapeur d'eau, une fraction des effluents gazeux issus des lignes (17), (18) ou (19) ou un mélange de vapeur d'eau et de fractions d'effluents issus des lignes (17), (18) ou (19). Afin de limiter l'entraînement de particules en aval, des cyclones ou autres moyens de dépoussiérage bien connus de l'homme du métier sont disposés à l'intérieur des réacteurs (3b) et (3c) ou à la sortie de ceux-ci sur les conduites des lignes (18) et (19).

L'oxyde métallique sur lequel l'essentiel du coke déposé a été brûlé par passage successif dans les réacteurs (2), (3a), (3b) et (3c) est ensuite évacué vers la zone d'oxydation (1) à travers une ou plusieurs lignes de transport qui soutirent le solide du lit fluidisé du réacteur (3c) ou des jambes de retour des cyclones assurant le dépoussiérage des effluents gazeux issus du réacteur (3c).
Dans la zone d'oxydation (1), l'oxyde métallique réduit par la combustion de la charge liquide est oxydé de nouveau au contact de l'air dans un réacteur fluidisé opérant soit en phase dense, soit en lit circulant. Les effluents gazeux contenant essentiellement de l'air appauvri en oxygène sortent de la zone d'oxydation (1) dans sa partie supérieure, après avoir été dépoussiérés par la mise en oeuvre de moyens connus de l'homme du métier. La zone d'oxydation (1) peut être constituée d'un lit fluidisé circulant (vitesse superficielle du gaz supérieure à la vitesse de transport des particules) ou d'un lit fluidisé en phase dense (vitesse superficielle du gaz inférieure à la vitesse de transport des particules et supérieure à la vitesse minimum de fluidisation). Dans le cas d'un lit fluidisé circulant, une partie de l'oxyde circulant dans la zone d'oxydation (1) peut être recyclée à la sortie du réacteur vers le bas de la zone d'oxydation (1), à proximité de moyens d'introduction d'air après avoir été séparés au préalable par des moyens de séparation tels que des cyclones.
L'oxyde métallique oxydé de nouveau est ensuite envoyé pour effectuer la combustion en partie vers la zone de transport (2) à travers une ou plusieurs lignes de transport (13) débouchant dans la zone de transport (2) en amont des moyens (6) permettant l'atomisation de la charge. Un gaz de fluidisation (par exemple de la vapeur) est introduit par une ligne (7) en amont des lignes de transport (13) pour assurer la fluidisation en amont du contact avec la charge liquide. Le reste de l'oxyde métallique est envoyé directement dans la zone de combustion en phase dense (3) à travers les lignes de transport (14), (23) et (24) et by-passe la zone de transport (2). La répartition des débits d'oxyde entre les lignes (13), (14), (23) et (24) sera avantageusement répartie en fonction de la répartition de la combustion dans chacune des zones avec pour objectif de minimiser le débit d'oxyde métallique circulant dans les zones (3a), puis (3b) puis (3c). Il est également possible d'injecter l'ensemble de l'oxyde métallique à travers la ligne (13), à travers la ligne (13) et la ligne (14) ou à travers les lignes (13), (14) et (23). L'oxyde métallique participant à la réaction de combustion dans la zone de transport (2) provient dans cet exemple de la zone d'oxydation à travers la ligne (13). Il est également envisageable d'alimenter la zone de transport (2) d'oxyde métallique par un recycle des particules provenant des zones (3a,3b ou 3c) de combustion en phase dense ou par un mélange d'oxydes métalliques oxydés de nouveau provenant de la zone (1) et d'oxydes métalliques provenant des zones (3a, 3b ou 3c).

### Figure 4 :

La figure 4 décrit un troisième mode de mise en oeuvre de l'invention, dans lequel la zone de combustion (3) comprend deux réacteurs en lit fluidisé en phase dense en série (3a) et (3b), le réacteur (3b) est équipé d'internes (25) permettant d'étager l'écoulement des particules d'oxyde métallique.
La combustion en boucle chimique s'effectue par réduction des oxydes métalliques dans les réacteurs (2) et (3a, 3b).
La charge liquide introduite par la ligne (4) est mélangée à un gaz d'atomisation introduit par la ligne (5) et le mélange est introduit dans la zone de transport (2), qui est un réacteur de forme sensiblement allongée, à travers des moyens d'atomisation (6) permettant de former des gouttelettes de liquide fines dispersées dans le gaz d'atomisation. Plusieurs points d'injection sont possibles. Les moyens d'atomisation (6) sont répartis en paroi du réacteur de la zone de transport (2), sensiblement dans la partie basse de celui-ci. La zone de transport (2) débouche dans le réacteur (3a) de la zone de combustion en lit fluidisé en phase dense dans lequel la phase gazeuse et la phase solide sont dispersées. L'ensemble des effluents gazeux entre dans le réacteur (3a) de la zone de combustion en lit fluidisé en phase dense et en sort par la ligne (17). La phase gazeuse est alors constituée essentiellement de CO2 ou de (CO, H2) en fonction des conditions stoechiométriques et de réaction imposée, de la vapeur d'eau et des oxydes de soufre et d'azote... Un gaz de fluidisation est introduit par une ligne (8) à la base de la zone de combustion en phase dense, dans le réacteur (3a), et permet une fluidisation homogène sur toute la section. Ce gaz de fluidisation peut avantageusement être : de la vapeur d'eau, une fraction des effluents gazeux issus de la ligne (17) ou un mélange de vapeur d'eau et de fractions d'effluents issus de la ligne (17). Afin de limiter l'entraînement de particules en aval, des cyclones ou autres moyens de dépoussiérage bien connus de l'homme du métier sont disposés à l'intérieur de la zone de combustion en phase dense (3a) ou à la sortie de celle-ci sur la conduite (17).

Les oxydes métalliques sont évacués vers un réacteur (3b), dans lequel les particules sont fluidisées en phase dense par un gaz arrivant par la ligne (15), à une vitesse inférieure à la vitesse de transport des particules. Dans ce réacteur, la fin de la combustion du coke déposé sur les particules est réalisée. Les effluents gazeux de combustion sortent du réacteur fluidisé en phase dense (3b) par la ligne (18), constitués essentiellement de CO2 ou de (CO, H2) en fonction des conditions stoechiométriques et de réaction imposée, de la vapeur d'eau et des oxydes de soufre et d'azote. Le gaz de fluidisation (15) introduit à la base du réacteur (3b) permet la fluidisation homogène sur toute la section. Ce gaz de fluidisation peut avantageusement être soit de la vapeur d'eau, une fraction des effluents gazeux issus des lignes (17) ou (18) ou un mélange de vapeur d'eau et de fractions d'effluents issus des lignes (17) ou (18). Afin de limiter l'entraînement de particules en aval, des cyclones ou autres moyens de dépoussiérage bien connus de l'homme du métier sont disposés à l'intérieur du réacteur (3b) ou à la sortie de celui-ci sur la conduite de la ligne (18).

Le lit fluidisé en phase dense contenu dans le réacteur (3b) est équipé d'internes constituant les moyens (25) permettant d'étager l'écoulement des particules d'oxyde métallique. Ces moyens sont par exemple des plaques perforées, des garnissages structurés, ou des ensembles de barres, de chicanes ou de chevrons disposés successivement selon des plans sensiblement horizontaux. L'oxyde métallique est introduit dans le réacteur (3b) au dessus de la rangée d'internes la plus élevée dans l'enceinte (3b) et soutiré au dessous de la rangée d'internes la plus basse dans le réacteur (3b). Grâce aux moyens (25), l'écoulement des oxydes métalliques est modifié et on peut effectuer un contre-courant entre le gaz ascendant et l'oxyde métallique descendant, l'écoulement de l'oxyde métallique dans le réacteur (3b) se rapprochant de l'écoulement observable dans plusieurs réacteurs parfaitement agités successifs.

L'oxyde métallique sur lequel l'essentiel du coke déposé a été brûlé par passage successif dans les réacteurs (2), (3a) et (3b) est ensuite évacué vers la zone d'oxydation (1) à travers une ou plusieurs lignes de transport (22) qui soutirent le solide du lit fluidisé du réacteur (3b) ou des jambes de retour des cyclones assurant le dépoussiérage des effluents gazeux du réacteur (3b).
Dans la zone d'oxydation (1), l'oxyde métallique réduit par la combustion de la charge liquide est oxydé de nouveau au contact de l'air dans un réacteur fluidisé opérant soit en phase dense soit en lit circulant. Les effluents gazeux contenant essentiellement de l'air appauvri en oxygène sortent de la zone d'oxydation (1) dans sa partie supérieure, après avoir été dépoussiérés par la mise en oeuvre de moyens connus de l'homme du métier. La zone d'oxydation (1) peut être constituée d'un lit fluidisé circulant (vitesse superficielle du gaz supérieure à la vitesse de transport des particules) ou d'un lit fluidisé en phase dense (vitesse superficielle du gaz inférieure à la vitesse de transport des particules et supérieure à la vitesse minimum de fluidisation). Dans le cas d'un lit fluidisé circulant, une partie de l'oxyde circulant dans la zone d'oxydation (1) peut être recyclée à la sortie du réacteur vers le bas de la zone d'oxydation (1), à proximité de moyens d'introduction d'air après avoir été séparés au préalable par des moyens de séparation tels que des cyclones.
L'oxyde métallique oxydé de nouveau est ensuite envoyé en partie vers la zone de transport (2) à travers une ou plusieurs lignes de transport (13) débouchant dans la zone de transport (2) en amont des moyens (6) permettant l'atomisation de la charge. Un gaz de fluidisation (par exemple de la vapeur) est introduit par une ligne (7) en amont des lignes de transport (13) pour assurer la fluidisation en amont du contact avec la charge liquide. Le reste de l'oxyde métallique est envoyé directement dans le réacteur (3b) de la zone de combustion en phase dense à travers la ou les lignes de transport (24) et bypasse le zone de transport (2). La répartition des débits d'oxyde entre les lignes (13) et (24) sera avantageusement répartie en fonction de la répartition de la combustion dans chacune des zones avec pour objectif de minimiser le débit d'oxyde métallique circulant dans la zone (3a). Il est également possible d'injecter l'ensemble de l'oxyde métallique à travers la ligne (13), à travers la ligne (13) et la ligne (14) ou à travers les lignes (13), (14) et (23).

Dans une variante, il est possible d'agencer le réacteur (3b) directement sous le réacteur (3a), les parois extérieures de ces deux réacteurs coïncidant alors. Dans ces conditions, la phase dense du réacteur (3a) sera prolongée par continuité dans la phase dense fluidisée du réacteur (3b). L'effluent gazeux du réacteur (3b) traverse alors la phase dense du réacteur (3a) sans qu'il soit alors nécessaire de procéder au dépoussiérage de l'effluent gazeux issu de la phase dense contenue dans le réacteur (3b).
Il est également envisageable d'alimenter la zone de transport (2) d'oxyde métallique par un recycle des particules provenant des réacteurs (3a ou 3b) de la zone de combustion en phase dense ou par un mélange d'oxydes métalliques oxydés de nouveau provenant de la zone d'oxydation (1) et d'oxydes métalliques provenant des réacteurs de combustion en phase dense (3a ou 3b).

Pour l'ensemble des mises en oeuvre proposées et imaginables à partir de l'invention, les moyens suivants permettant d'assurer l'étanchéité entre les zones d'oxydation et de réduction et de contrôler la circulation d'oxyde métallique entre les différentes enceintes, peuvent être mis en oeuvre :
- Afin d'assurer l'étanchéité entre les zones d'oxydation de l'oxyde métallique et les zones de réduction de l'oxyde métallique, des moyens peuvent être mis en oeuvre pour limiter l'entraînement gazeux entre ces zones. Ces moyens sont constitués soit de siphons ou de vannes sur solides (vannes en L par exemple) bien connus de l'homme du métier, ou de vannes mécaniques bien connues également telles que des vannes à pelle (slide valves).
- Le contrôle de la circulation entre les différentes zones peut être ajusté soit en jouant sur les débits de fluidisation imposés dans les différents siphons et vannes sur solide, soit en jouant sur l'ouverture des vannes mécaniques, soit en jouant sur la différence de pression entre les différentes zones, grâce à des vannes situées en aval de ces zones sur les lignes évacuant les effluents gazeux.

### Exemples

Les performances d'une unité de combustion opérant par combustion en boucle chimique et traitant une charge liquide constituée d'un résidu sous vide pétrolier dont l'analyse est la suivante :

**Tableau 1**

| | %pds |
|---|---|
| C | 85.2 |
| H | 10.3 |
| N | 0.5 |
| S | 4 |

ont été calculées.
L'oxyde métallique utilisé est un minerai de titane et de fer capable de transférer pendant la mise en oeuvre de la combustion par boucle chimique 1% en poids d'oxygène rapporté à la masse des particules utilisées. La quantité de résidu traitée par cette unité est de 30 kg/s. La circulation de particules requises pour assurer la combustion du résidu est de 34000 t/h.

Dans un premier cas, le taux de captage S de CO2 (correspondant à la quantité de CO2 récupéré dans la zone de combustion du résidu par réduction d'oxyde métallique rapportée à la quantité totale de CO2 émis par l'installation) est calculé dans différentes configurations de l'unité.

Dans l'exemple 1, la zone réactionnelle considérée pour assurer la combustion du résidu par réduction de l'oxyde métallique est un simple lit fluidisé opérant à une vitesse superficielle de gaz inférieure à la vitesse de transport des oxydes métalliques dans lequel le résidu est injecté par des moyens d'atomisation en paroi de l'enceinte.

Dans l'exemple 2, la zone réactionnelle considérée pour assurer la combustion du résidu par réduction de l'oxyde métallique est constituée d'un enchaînement de réacteurs tel que décrit sur la figure 2. La quantité d'oxydes métalliques introduite dans la zone de transport par la ligne (13) provient de la zone d'oxydation et correspond à un débit de 2000 t/h environ. Le reste de l'oxyde métallique circulant est directement introduit dans la zone de combustion en phase dense par la ligne (12).

Dans l'exemple 3, la zone réactionnelle considérée pour assurer la combustion du résidu par réduction de l'oxyde métallique est constituée d'un enchaînement de réacteurs tel que décrit sur la figure 3, en considérant une succession de deux zones de réduction de l'oxyde métallique (3a) et (3b). Dans ce cas, la quantité d'oxydes métalliques introduite dans la zone de transport par la ligne (13) provient de la zone d'oxydation et correspond à un débit de 2000t/h environ. Le reste de l'oxyde métallique circulant est également introduit dans la zone de combustion en phase dense dans la zone (3a) par la ligne (14).

Dans l'exemple 4, la zone réactionnelle considérée pour assurer la combustion du résidu par réduction de l'oxyde métallique est constituée d'un enchaînement de réacteurs tel que décrit sur la figure 3, mais en considérant une succession de 5 zones en série de réduction de l'oxyde métallique (3a, 3b, 3c, 3d et 3e). Dans ce cas, la quantité d'oxydes métalliques introduite dans la zone de transport par la ligne (13) provient de la zone d'oxydation et correspond à un débit de 2000t/h environ. Le reste de l'oxyde métallique circulant est également introduit dans la zone de combustion en phase dense dans la zone (3a) par la ligne (14).

Les moyens d'atomisation utilisés pour introduire la charge sont dans tous les cas identiques dans leur principe et dans leurs conditions de mise en oeuvre. Par ailleurs les températures de l'oxyde métallique sortant de chacune des zones de réduction et d'oxydation sont supposées identiques d'un exemple à l'autre, respectivement égales à 900 et 950°C. La pression en sortie des zones (1) et (3) est voisine de 1,2 bars absolus. Dans un premier temps, on calcule le taux S de captage de CO2 en considérant un inventaire M d'oxyde métallique constant dans la zone globale de combustion du résidu par réduction de l'oxyde métallique et égal à environ 1130 t. Les résultats de ce calcul sont consignés dans le tableau 2 :

**Tableau 2**

| exemple | 1 | 2 | 3 | 4 |
|---|---|---|---|---|
| M (T) | 1130 | 1130 | 1130 | 1130 |
| S (%) | 79 | 88 | 91.6 | 94 |

Dans un deuxième temps, on calcule l'inventaire M d'oxyde métallique requis dans la zone de combustion globale du résidu par réduction de l'oxyde métallique pour atteindre un taux S de captage de CO2 égal à 90%. Les résultats de ce calcul sont consignés dans le tableau 3 :

**Tableau 3**

| exemple | 1 | 2 | 3 | 4 |
|---|---|---|---|---|
| M (T) | 1616 | 1182 | 985 | 788 |
| S (%) | 90 | 90 | 90 | 90 |

La comparaison des exemples 1 et 2 montre que la mise en oeuvre du procédé selon l'invention, avec injection de résidu dans une zone de transport (2) permet d'améliorer substantiellement le taux S de captage du CO2 dans les fumées de la zone de réduction de l'oxyde métallique (tableau 2), ou de réduire substantiellement l'inventaire de particules requis (et donc la taille des réacteurs et l'investissement requis pour la mise en oeuvre du procédé) pour effectuer la combustion en maintenant un taux S de captage du CO2 constant et égal à 90%. Cela est dû à une réduction substantielle de la quantité de coke formé au contact des particules d'oxyde métallique avec le résidu finement atomisé.

La comparaison des exemples 2, 3 et 4 montre que l'augmentation du nombre de réacteurs dans la zone de combustion en lit fluidisé en phase dense (3) permet d'améliorer le taux de captage S quand le même inventaire est réparti en plusieurs réacteurs fluidisés en série, ou de réduire significativement l'inventaire requis et donc la taille des réacteurs et l'investissement requis pour la mise en oeuvre du procédé pour effectuer la combustion en maintenant un taux S de captage du CO2 constant et égal à 90%. Cela est dû à un meilleur contrôle de l'écoulement des particules pendant la réduction en phase dense.

## Revendications

1. Procédé amélioré de combustion en boucle chimique d'au moins une charge hydrocarbonée liquide, dans lequel :
- on atomise la charge liquide avec un gaz d'atomisation pour l'introduire dans une zone de transport (2) des oxydes métalliques, en amont de la zone de combustion (3), à travers des moyens d'atomisation (6) permettant de former des gouttelettes de liquide finement dispersées dans le gaz d'atomisation ;
- on vaporise la charge liquide sous forme de gouttelettes au contact d'au moins une partie des oxydes métalliques dans la zone de transport (2), les conditions opératoires dans la zone de transport (2) étant choisies pour que la vitesse superficielle du gaz après vaporisation de la charge liquide soit supérieure à la vitesse de transport des particules d'oxydes métalliques ;
- on envoie l'ensemble des effluents issus de la zone de transport (2) dans une zone de combustion (3) permettant la réduction des oxydes métalliques, ladite zone de combustion (3) comprenant au moins un lit fluidisé en phase dense.

2. Procédé amélioré de combustion en boucle chimique selon la revendication 1 dans lequel la zone de combustion en phase dense (3) est dimensionnée de manière à ce que l'hydrodynamique des particules dans le ou les lit(s) fluidisé(s) en phase dense corresponde à au moins deux réacteurs parfaitement agités en série ou au moins deux étages de lit fluidisé en série.

3. Procédé amélioré de combustion en boucle chimique selon l'une des revendications 1 ou 2 dans lequel les moyens d'atomisation (6) sont situés à la paroi du réacteur de la zone de transport (2) et choisis de manière à former un jet dirigé vers le centre de la zone de transport (2).

4. Procédé amélioré de combustion en boucle chimique selon la revendication 3 dans lequel le jet a la forme d'un pinceau ayant un angle d'ouverture dans le plan vertical compris entre 7 et 20°, et un angle d'ouverture dans le plan horizontal compris entre 30 et 80°.

5. Procédé amélioré de combustion en boucle chimique selon l'une des revendications 1 à 4 dans lequel les gouttelettes de charge liquide injectées ont un diamètre de Sauter moyen compris entre 0.5 et 2 fois le diamètre moyen des particules.

6. Procédé amélioré de combustion en boucle chimique selon l'une des revendications précédentes dans lequel les particules d'oxydes métalliques arrivent dans la zone de transport (2) depuis la zone d'oxydation (1) à travers une ligne (13), ou par un recycle des particules provenant de la zone de combustion (3), ou encore sous forme d'un mélange d'oxydes métalliques ré oxydés provenant de la zone d'oxydation (1) et d'oxydes métalliques provenant de la zone de combustion (3).

7. Procédé amélioré de combustion en boucle chimique selon l'une des revendications précédentes dans lequel on introduit dans le ou les lits fluidisés en phase dense de la zone de combustion (3) des oxydes métalliques directement issus de la zone d'oxydation (1), de manière à ce qu'une fraction inférieure ou égale à 50% de la quantité totale d'oxydes métalliques circulant entre la zone d'oxydation (1) et la zone de combustion (3) participe à la vaporisation de la charge liquide dans la zone de transport (2).

8. Procédé amélioré de combustion en boucle chimique selon l'une des revendications précédentes dans lequel on introduit le gaz et les particules issus de la zone de transport (2) de manière conjointe à la base d'au moins un lit fluidisé de la zone de combustion (3) en équipant la partie supérieure de la zone de transport (2) de moyens de dispersion dans ledit lit fluidisé.

9. Procédé amélioré de combustion en boucle chimique selon l'une des revendications 1 à 7 dans lequel on sépare le gaz et les particules à la sortie de la zone de transport (2) :
- pour introduire de manière séparée dans la zone de combustion (3) le gaz exempt de la majorité des oxydes métalliques et l'oxyde métallique exempt de la majorité du gaz,
- ou pour introduire dans la zone de combustion (3) l'oxyde métallique exempt de la majorité du gaz, et évacuer la phase gazeuse hors de la zone de combustion (3).

10. Procédé amélioré de combustion en boucle chimique selon l'une des revendications précédentes dans lequel la charge liquide est composée de fractions hydrocarbonées, seules ou en mélange, dont moins de 10% a un point d'ébullition inférieur à 340°C.

11. Procédé optimisé de combustion en boucle chimique selon l'une des revendications précédentes dans lequel au moins un lit fluidisé en phase dense de la zone de combustion (3) est équipé de moyens (25) permettant d'étager l'écoulement des particules d'oxyde métallique.

12. Procédé optimisé de combustion en boucle chimique selon l'une des revendications précédentes dans lequel la zone de combustion (3) comprend au moins deux réacteurs (3a) et (3b) en lits fluidisés en phase dense, agencés l'un au-dessus de l'autre, les parois extérieures de ces deux réacteurs coïncidant, afin de prolonger par continuité la phase dense du réacteur (3a) dans la phase dense fluidisée du réacteur (3b).

13. Dispositif de combustion en boucle chimique d'au moins une charge hydrocarbonée liquide comprenant :
- une zone de transport (2) des oxydes métalliques sensiblement allongée et sensiblement verticale comprenant :
▪ des moyens d'injection de la charge liquide comprenant des moyens de mélange de la charge liquide avec un gaz d'atomisation et des moyens d'atomisation (6) de la charge liquide situés en périphérie de ladite zone de transport;
▪ des moyens d'alimentation d'au moins une partie des oxydes métalliques;
- une zone de combustion (3) de la charge atomisée par réduction des oxydés métalliques comprenant au moins un lit fluidisé en phase dense, la zone de transport (2) étant située en amont de ladite zone de combustion (3).

14. Dispositif selon la revendication 13 dans lequel la zone de combustion (3) comprend un nombre de lits fluidisés en phase dense, dans un ou plusieurs réacteurs de combustion, supérieur à deux.

15. Dispositif selon l'une des revendications 13 à 14 dans lequel les moyens d'alimentation des oxydes métalliques comprennent une ligne (13) de transport depuis la zone d'oxydation (1), et/ou une ligne de recycle des particules provenant de la zone de combustion (3).

16. Dispositif selon l'une des revendications 13 à 15 dans lequel la zone de transport (2) comprend en sortie des moyens de dispersion du gaz et des particules solides dans la zone de combustion (3).

17. Dispositif selon l'une des revendications 13 à 16 dans lequel la zone de transport (2) comprend en sortie des moyens de séparation du gaz et des particules solides.

18. Procédé selon l'une des revendications 1 à 12 pour le captage du CO2.

19. Procédé selon la revendication 18 dans lequel le taux de captage S du CO2 est supérieur à 90%.

20. Procédé selon l'une des revendications 1 à 12 pour la production d'énergie.

## Patentansprüche

1. Verbessertes Verfahren der Chemical-Looping Verbrennung von mindestens einer flüssigen Kohlenwasserstoffbeschickung, wobei:
- die flüssige Beschickung mit einem Zerstäubungsgas durch Zerstäubungsmittel (6), die das Bilden von Flüssigkeitströpfchen ermöglichen, die in dem Zerstäubungsgas fein dispergiert sind, zerstäubt wird, um sie in einen Transportbereich (2) der Metalloxide, der dem Verbrennungsbereich (3) vorgelagert ist, einzuführen;
- die flüssige Beschickung in Form von Tröpfchen beim Kontakt mit mindestens einem Teil der Metalloxide in dem Transportbereich (2) verdampft wird, wobei die Betriebsbedingungen in dem Transportbereich (2) so gewählt werden, dass die Oberflächengeschwindigkeit des Gases nach dem Verdampfen der flüssigen Beschickung höher als die Transportgeschwindigkeit der Metalloxidteilchen ist;
- die Gesamtheit der Abströme, die aus dem Transportbereich (2) stammen, einem Verbrennungsbereich (3) zugeführt werden, der die Reduktion der Metalloxide ermöglicht, wobei der Verbrennungsbereich (3) mindestens ein Wirbelbett mit dichter Phase aufweist.

2. Verbessertes Verfahren der Chemical-Looping Verbrennung nach Anspruch 1, wobei der Verbrennungsbereich mit dichter Phase (3) so bemessen ist, dass die Hydrodynamik der Teilchen in dem (oder den) Wirbelbetten mit dichter Phase mindestens zwei perfekt in Reihe geschalteten Rührreaktoren oder mindestens zwei in Reihe geschalteten Fließbettstufen entspricht.

3. Verbessertes Verfahren der Chemical-Looping Verbrennung nach einem der Ansprüche 1 oder 2, wobei die Zerstäubungsmittel (6) an der Wand des Reaktors des Transportbereichs (2) angeordnet sind und ausgewählt werden, um einen Strahl zu bilden, der zur Mitte des Transportbereichs (2) gerichtet ist.

4. Verbessertes Verfahren der Chemical-Looping Verbrennung nach Anspruch 3, wobei der Strahl die Form eines Bündels aufweist, das einen Öffnungswinkel in der vertikalen Ebene von zwischen 7 und 20° und einen Öffnungswinkel in der horizontalen Ebene von zwischen 30 und 80° aufweist.

5. Verbessertes Verfahren der Chemical-Looping Verbrennung nach einem der Ansprüche 1 bis 4, wobei die eingespritzen Tröpfchen der flüssigen Beschickung einen mittleren Sauterdurchmesser des 0,5- bis 2-fachen des mittleren Teilchendurchmessers aufweisen.

6. Verbessertes Verfahren der Chemical-Looping Verbrennung nach einem der vorhergehenden Ansprüche, wobei die Metalloxidteilchen durch eine Leitung (13) aus dem Oxidationsbereich (1) oder durch ein Rezyklieren der Teilchen, die aus dem Verbrennungsbereich (3) stammen, oder auch in Form von einer Mischung aus wieder oxidierten Metalloxiden, die aus dem Oxidationsbereich (1) stammen, und Metalloxiden, die aus dem Verbrennungsbereich (3) stammen, in den Transportbereich (2) gelangen.

7. Verbessertes Verfahren der Chemical-Looping Verbrennung nach einem der vorhergehenden Ansprüche, wobei Metalloxide, die direkt aus dem Oxidationsbereich (1) stammen, in das (oder die) Wirbelbetten mit dichter Phase des Verbrennungsbereichs (3) eingeführt werden, so dass ein Bruchteil von höchstens 50 % der Gesamtmenge der Metalloxide, die zwischen dem Oxidationsbereich (1) und dem Verbrennungsbereich (3) zirkulieren, an der Verdampfung der flüssigen Beschickung in dem Transportbereich (2) teilnimmt.

8. Verbessertes Verfahren der Chemical-Looping Verbrennung nach einem der vorhergehenden Ansprüche, wobei das Gas und die Teilchen, die aus dem Transportbereich (2) stammen, gemeinsam auf der Grundlage von mindestens einem Wirbelbett des Verbrennungsbereichs (3) eingeführt werden, indem der obere Teil des Transportbereichs (2) mit Dispergierungsmitteln in dem Wirbelbett ausgestattet wird.

9. Verbessertes Verfahren der Chemical-Looping Verbrennung nach einem der Ansprüche 1 bis 7, wobei das Gas und die Teilchen am Ausgang des Transportbereichs (2) getrennt werden:
- um das Gas frei von der Mehrheit der Metalloxide und das Metalloxid frei von der Mehrheit des Gases getrennt in den Verbrennungsbereich (3) einzuführen
- oder, um das Metalloxid frei von der Mehrheit des Gases in den Verbrennungsbereich (3) einzuführen und die Gasphase außerhalb des Verbrennungsbereichs (3) zu evakuieren.

10. Verbessertes Verfahren der Chemical-Looping Verbrennung nach einem der vorhergehenden Ansprüche, wobei die flüssige Beschickung aus Kohlenwasserstofffraktionen besteht, die allein oder in Mischung sind, von denen weniger als 10 % einen Siedepunkt unter 340 °C aufweisen.

11. Verbessertes Verfahren der Chemical-Looping Verbrennung nach einem der vorhergehenden Ansprüche, wobei mindestens ein Wirbelbett mit dichter Phase des Verbrennungsbereiches (3) mit Mitteln (25) ausgestattet ist, die das Staffeln des Strömens der Metalloxidteilchen ermöglichen.

12. Verbessertes Verfahren der Chemical-Looping Verbrennung nach einem der vorhergehenden Ansprüche, wobei der Verbrennungsbereich (3) mindestens zwei Wirbelbettreaktoren (3a) und (3b) in dichter Phase aufweist, die übereinander angeordnet sind, wobei die Außenwände dieser beiden Reaktoren zusammenfallen, um die dichte Phase des Reaktors (3a) durch Kontinuität in die gewirbelte dichte Phase des Reaktors (3b) zu verlängern.

13. Vorrichtung zur Chemical-Looping Verbrennung von mindestens einer flüssigen Kohlenwasserstoffbeschickung, umfassend:
- einen Transportbereich (2) der Metalloxide, der im Wesentlichen länglich und im Wesentlichen vertikal ist, umfassend:
• Mittel zum Einspritzen der flüssigen Beschickung, die Mittel zum Mischen der flüssigen Beschickung mit einem Zerstäubungsgas und Zerstäubungsmittel (6) der flüssigen Beschickung aufweisen, die am Rand des Transportbereichs angeordnet sind;
• Mittel zum Zuführen mindestens eines Teils der Metalloxide;
- einen Verbrennungsbereich (3) der zerstäubten Beschickung durch Reduktion der Metalloxide, umfassend mindestens ein Wirbelbett mit dichter Phase, wobei der Transportbereich (2) vor dem Verbrennungsbereich (3) vorgelagert angeordnet ist.

14. Vorrichtung nach Anspruch 13, wobei der Verbrennungsbereich (3) eine Anzahl von Wirbelbetten mit dichter Phase in einem oder mehreren Verbrennungsreaktoren aufweist, die größer als zwei ist.

15. Vorrichtung nach einem der Ansprüche 13 bis 14, wobei die Mittel zum Zuführen der Metalloxide eine Leitung (13) für den Transport aus dem Oxidationsbereich (1) und/oder eine Leitung zum Rezyklieren der Teilchen, die aus dem Verbrennungsbereich (3) stammen, aufweisen.

16. Vorrichtung nach einem der Ansprüche 13 bis 15, wobei der Transportbereich (2) am Ausgang Mittel zum Dispergieren des Gases und der Feststoffteilchen in dem Verbrennungsbereich (3) aufweist.

17. Vorrichtung nach einem der Ansprüche 13 bis 16, wobei der Transportbereich (2) am Ausgang Mittel zum Trennen des Gases und der Feststoffteilchen aufweist.

18. Verfahren nach einem der Ansprüche 1 bis 12 für die CO2-Abscheidung.

19. Verfahren nach Anspruch 18, wobei der CO2-Abscheidegrad S größer als 90 % ist.

20. Verfahren nach einem der Ansprüche 1 bis 12 zur Energieerzeugung.

## Claims

1. An improved method for chemical looping combustion of at least one liquid hydrocarbon feed, comprising:
- atomizing the liquid feed with an atomization gas so as to feed it into a metal oxide transport zone (2), upstream from combustion zone (3), through atomization means (6) allowing to form finely dispersed liquid droplets in the atomization gas ;
- spraying the liquid feed in form of droplets into contact with at least part of the metal oxides in transport zone (2), the operating conditions in transport zone (2) being so selected that the superficial gas velocity after spraying the liquid feed is higher than the transport velocity of the metal oxide particles ;
- sending all of the effluents from transport zone (2) to a combustion zone (3) allowing reduction of the metal oxides, said combustion zone (3) comprising at least one dense-phase fluidized bed.

2. An improved chemical looping combustion method as claimed in claim 1, wherein dense-phase combustion zone (3) is so dimensioned that the hydrodynamics of the particles in the dense-phase fluidized bed(s) correspond to at least two perfectly stirred reactors in series or to at least two fluidized bed stages in series.

3. An improved chemical looping combustion method as claimed in any one of claims 1 or 2, wherein atomization means (6) are arranged on the wall of the reactor of transport zone (2) and so selected as to form a jet oriented towards the centre of transport zone (2).

4. An improved chemical looping combustion method as claimed in claim 3, wherein the jet has the shape of a pencil with an opening angle in the vertical plane ranging between 7° and 20°, and an opening angle in the horizontal plane ranging between 30° and 80°.

5. An improved chemical looping combustion method as claimed in any one of claims 1 to 4, wherein the liquid feed droplets injected have a Sauter mean diameter ranging between 0.5 and 2 times the mean diameter of the particles.

6. An improved chemical looping combustion method as claimed in any one of the previous claims, wherein the metal oxide particles reach transport zone (2) from oxidation zone (1) through a line (13), or through recycle of the particles coming from combustion zone (3), or in form of a mixture of re-oxidized metal oxides from oxidation zone (1) and of metal oxides from combustion zone (3).

7. An improved chemical looping combustion method as claimed in any one of the previous claims, wherein metal oxides coming directly from oxidation zone (1) are fed into the dense-phase fluidized bed(s) of combustion zone (3), so that a fraction less than or equal to 50 % of the total amount of metal oxides circulating between oxidation zone (1) and combustion zone (3) takes part in the spraying of the liquid feed in transport zone (2).

8. An improved chemical looping combustion method as claimed in any one of the previous claims, wherein the gas and the particles from transport zone (2) are fed together to the base of at least one fluidized bed of combustion zone (3), the upper part of transport zone (2) being equipped with dispersion means in said fluidized bed.

9. An improved chemical looping combustion method as claimed in any one of claims 1 to 7, wherein the gas and the particles are separated at the outlet of transport zone (2):
- either to feed separately into combustion zone (3) the gas freed of the major part of the metal oxides and the metal oxide freed of the major part of the gas,
- or to feed into combustion zone (3) the metal oxide freed of the major part of the gas, and to discharge the gas phase out of combustion zone (3).

10. An improved chemical looping combustion method as claimed in any one of the previous claims, wherein the liquid feed is made up of hydrocarbon fractions, alone or in admixture, less than 10 % thereof having a boiling point temperature below 340°C.

11. An improved chemical looping combustion method as claimed in any one of the previous claims, wherein at least one dense-phase fluidized bed of combustion zone (3) is equipped with means (25) allowing the flow of the metal oxide particles to be staged.

12. An improved chemical looping combustion method as claimed in any one of the previous claims, wherein combustion zone (3) comprises at least two dense-phase fluidized bed reactors (3a) and (3b), arranged one above the other, the outer walls of these two reactors coinciding, so as to extend by continuity the dense phase of reactor (3a) in the fluidized dense phase of reactor (3b).

13. A device for chemical looping combustion of at least one liquid hydrocarbon feed, comprising:
- a substantially elongate and substantially vertical metal oxide transport zone (2) comprising:
• liquid feed injection means comprising means for mixing the liquid feed with an atomization gas and liquid feed atomization means (6) arranged on the periphery of said transport zone,
• feed means for at least part of the metal oxides,
- a combustion zone (3) for the atomized feed through metal oxides reduction, comprising at least one dense-phase fluidized bed, transport zone (2) being arranged upstream from said combustion zone (3).

14. A device as claimed in claim 13, wherein combustion zone (3) comprises a number of dense-phase fluidized beds, in one or more combustion reactors, greater than two.

15. A device as claimed in any one of claims 13 and 14, wherein the metal oxide feed means comprise a transport line (13) from oxidation zone (1), and/or a recycle line for the particles coming from combustion zone (3).

16. A device as claimed in any one of claims 13 to 15, wherein transport zone (2) comprises, at the outlet thereof, dispersion means for gas and solid particles dispersion in combustion zone (3).

17. A device as claimed in any one of claims 13 to 16, wherein transport zone (2) comprises, at the outlet thereof, gas and solid particles separation means.

18. A method as claimed in any one of claims 1 to 12 for CO₂ capture.

19. A method as claimed in claim 18, wherein CO₂ capture rate S is above 90 %.

20. A method as claimed in any one of claims 1 to 12 for energy production.
